# EUROPÄISCHE PATENTSCHRIFT

(11) **EP 3 440 287 B1**
(45) Veröffentlichungstag und Bekanntmachung des Hinweises auf die Patenterteilung: **04.11.2020**
(21) Anmeldenummer: 17715448.1
(22) Anmeldetag: 03.04.2017
(51) Int. Cl.: F16B 7/04, F16B 7/20

(54) **BEFESTIGUNGSELEMENT FÜR WANSCHALUNGEN**
FASTENING ELEMENT FOR WALL FORMWORKS
ÉLÉMENT DE FIXATION DE COFFRAGE DE PAROI

(30) Priorität: 08.04.2016 DE 102016205884
(43) Veröffentlichungstag der Anmeldung: 13.02.2019
(73) Patentinhaber: Peri GmbH, 89264 Weissenhorn (DE)
(72) Erfinder: RENZ, Bernd, 89269 Vöhringen (DE); HAEBERLE, Wilfried, 89129 Langenau (DE); KNOPP, Fabian, 89284 Pfaffenhofen (DE); SCHNEIDER, Werner, 89155 Erbach (DE)
(74) Vertreter: K & H Bonapat Patentanwälte Koch · von Behren & Partner mbB
(86) Internationale Anmeldenummer: PCT/EP2017/057823
(87) Internationale Veröffentlichungsnummer: WO 2017/174490

(56) Entgegenhaltungen:
- WO-A1-2008/025050
- WO-A1-2010/088628
- FR-A- 1 134 455
- FR-A- 1 582 901
- NZ-A- 588 933
- US-A- 5 843 327
- US-A1- 2012 018 942

## Beschreibung

Die Erfindung betrifft ein Befestigungselement für ein Schalungssystem zur Herstellung eines Bauwerks aus Ortbeton. Die Erfindung betrifft weiterhin ein Schalungssystem mit einem Befestigungselement. Schließlich betrifft die Erfindung ein Verfahren zum Aufbau eines Schalungssystems.

Es ist bekannt, ein Schalungssystem zur Herstellung eines Bauwerks aus Ortbeton, insbesondere zur Herstellung einer betonierten Wand, einzusetzen. In vielen Fällen wird eine Stellschalwand und eine der Stellschalwand gegenüberliegende Schließschalwand verwendet. Sowohl die Stellschalwand als auch die Schließschalwand werden typischerweise jeweils durch zumindest eine Richtstütze abgestützt, wobei die Richtstütze der Stellschalwand von der der Schalhaut abgewandten Seite der Stellschalwand wegragt und die Richtstütze der Schließschalwand von der der Schalhaut abgewandten Seite der Schließschalwand wegragt.

Aus Platzgründen, beispielsweise wenn ein Schalungssystem in einer Baugrube eingesetzt wird, ist es jedoch manchmal nicht möglich, sowohl die Stellschalwand als auch die Schließschalwand mit jeweils einer Richtstütze abzustützen.

Aus der US 4,052,031 A und aus der WO 2008/025050 A1 ist es zur Lösung dieses Problems bekannt geworden, sowohl eine Stellschalwand als auch eine Schließschalwand nur zu einer Richtung hin mit einer Richtstütze abzustützen. Hierzu ist in der US 4,052,031 A die Schließschalwand parallel versetzt zur Stellschalwand angeordnet, sodass die Richtstütze an der Schließschalwand vorbeigeführt werden kann. Der seitliche Versatz der Schließschalwand zur Stellschalwand ist jedoch häufig unerwünscht. Gemäß der WO 2008/025050 A1 wird die eine Schalungswand an der zweiten Schalungswand fixiert, an welcher zweiten Schalungswand dann die Richtstütze anliegt, sodass mit einer einzelnen Richtstütze zwei Wandelemente einseitig abstützbar sind. Derselbe Sachverhalt geht so auch aus der WO 2010/088628 A1 hervor.

Eine verschwenkbare Anlenkung mittels Befestigungelements zwischen zwei Schalungswänden ist dabei ferner aus der FR 1 582 901 bekannt.

Aus der WO 2010/088628 A1 ist ein Schalungssystem bekannt geworden, bei dem eine Stellschalwand und eine Schließschalwand fest miteinander verbunden sind und dieser Verbund zu einer Seite hin durch Richtstützen abgestützt ist. Durch den festen Verbund von Stellschalwand und Schließschalwand werden Auf- und Abbau des bekannten Schalungssystems jedoch aufwändig und unflexibel.

Die Aufgabe der vorliegenden Erfindung ist es daher, den flexiblen Auf- und Abbau eines Schalungssystems zur Herstellung eines Bauwerks aus Ortbeton zu ermöglichen, wobei das Schalungssystem nur an einer Seite durch eine oder mehrere Richtstützen abgestützt wird.

Die erfindungsgemäße Aufgabe wird gelöst durch ein Befestigungselement gemäß Anspruch 1, ein Schalungssystem gemäß Anspruch 8 und ein Verfahren gemäß Anspruch : 10. Die Unteransprüche geben zweckmäßige Weiterbildungen an.

Die erfindungsgemäße Aufgabe wird somit gelöst durch ein Befestigungselement für ein Schalungssystem zur Herstellung eines Bauwerks aus Ortbeton, insbesondere zur Herstellung einer Wand. Das Befestigungselement weist ein Montageteil auf, das an einer Stellschalwand des Schalungssystems befestigbar ist. Weiterhin weist das Befestigungselement ein winkelförmiges Element mit einem ersten Schenkel und einem zweiten Schenkel auf. Der erste Schenkel ist Teil des Montageteils oder, mittelbar oder unmittelbar, am Montageteil angeordnet. Der zweite Schenkel weist ein frei auskragendes Ende auf. Am im Übrigen frei auskragenden Ende des zweiten Schenkels ist eine Richtstütze des Schalungssystems angeordnet oder anordenbar. Das Befestigungselement weist insgesamt eine Galgenform auf. Stellschalwand, Schließschalwand und Richtstütze können handelsüblich gemäß dem Stand der Technik ausgebildet sein. Hierdurch kann ein herkömmliches Schalungssystem gemäß dem Stand der Technik, wie bislang üblich, auf einer Baustelle flexibel eingesetzt werden. Kann nun die Stellschalwand nicht - wie im Regelfall - mit einer von der der Schalhaut abgewandten Seite der Stellschalwand wegweisenden Richtstütze abgestützt werden, kann das erfindungsgemäße Befestigungselement eingesetzt werden. Das Befestigungselement wird an seinem Montageteil an der Stellschalwand befestigt. Das frei auskragende Ende des Befestigungselements dient dann als Anbindungspunkt für eine Richtstütze. Im montierten Zustand übergreift somit das Befestigungselement die Schalhaut der Stellschalwand, sodass auf eine Abstützung der Stellschalwand an der der Schalhaut der Stellschalwand abgewandten Seite der Stellschalwand verzichtet werden kann. Mit anderen Worten kann die Stellschalwand dicht an einem Hindernis aufgestellt werden, ohne dass zu dem Hindernis hin, d. h. in die von der Schalhaut der Stellschalwand abgewandten Richtung, ein Freiraum für eine Richtstütze vorgesehen werden muss.

Der erste Schenkel kann bewegbar, insbesondere begrenzt schwenkbar relativ zum zweiten Schenkel ausgebildet sind. Vorzugsweise ist jedoch der erste Schenkel unflexibel, unbeweglich bzw. steif relativ zum zweiten Schenkel ausgebildet. Hierdurch wird die konstruktive Ausbildung des Befestigungselements vereinfacht.

Um die Montage des Befestigungselements an der Stellschalwand zu erleichtern, wenn die Stellschalwand im Wesentlichen eben auf dem Boden liegt, ist das frei auskragende Ende des zweiten Schenkels in besonders bevorzugter Ausführung der Erfindung relativ zum Montageteil bewegbar. In diesem Fall ist das frei auskragende Ende des zweiten Schenkels vom Montageteil anhebbar und das Befestigungselement kann an der Stellschalwand befestigt werden, ohne die im Wesentlichen am Boden liegende Stellschalwand anzuheben.

Die Bewegbarkeit des frei auskragenden Endes des zweiten Schenkels relativ zum Montageteil wird vorzugsweise erreicht, indem das winkelförmige Element zumindest begrenzt schwenkbar am Montageteil angeordnet ist. Der zweite Schenkel ist dabei bevorzugt starr relativ zum ersten Schenkel ausgebildet. Weiter bevorzugt weist das Befestigungselement eine Montagestellung auf, in der das winkelförmige Element reversibel lösbar relativ zum Montageteil verrastbar ist. In der Montagestellung kann dadurch das winkelförmige Element fest relativ zum Montageteil verrastet werden, sodass das frei auskragende Ende des zweiten Schenkels einen festen Anbindungspunkt im montierten Zustand des Schalungssystems darstellt. Der erste Schenkel ist in der Montagestellung vorzugsweise bis auf ±20° parallel zum Montageteil angeordnet.

Die Richtstütze kann begrenzt verschwenkbar, aber dauerhaft am Befestigungselement angeordnet sein. Vorzugsweise ist die Richtstütze jedoch lösbar verrastbar am Ende des zweiten Schenkels montierbar. Die Richtstütze kann dadurch auch auf konventionelle Art und Weise - ohne Befestigungselement - eingesetzt werden. Weiterhin ist das Befestigungselement hierdurch einfacher transportierbar.

In weiter bevorzugter Ausgestaltung der Erfindung ist die Verrastung der Richtstütze am Befestigungselement mittels einer Fernbetätigung lösbar. Die Fernbetätigung kann in Form eines Stabes ausgebildet sein, der zum Öffnen der Rastverbindung einsetzbar ist. Beispielsweise kann die Rastverbindung des Befestigungselements eine Kappe aufweisen, die durch die Fernbetätigung bewegbar ist, um die Richtstütze von dem Befestigungselement entnehmen zu können.

Das Montageteil des Befestigungselements kann durch eine Kraftschlussverbindung an der Stellschalwand montierbar sein. Alternativ oder zusätzlich dazu kann das Montageteil durch eine Formschlussverbindung an die Stellschalwand montierbar sein. Die Formschlussverbindung weist dabei vorzugsweise zumindest einen Zapfen auf, der in eine Ausnehmung einführbar ist, wobei ein von einem Benutzer bewegbares Riegelelement die Anordnung des Zapfens in der Ausnehmung sichern kann.

Am freien Ende des Befestigungselements kann das Befestigungselement einen Schnellanschluss für die Richtstütze aufweisen. Unter einem Schnellanschluss wird eine Anbindungsmöglichkeit verstanden, die ein sicheres Verrasten der Richtstütze durch deren Einschieben in den Schnellanschluss ermöglicht. Alternativ oder zusätzlich zu dem Schnellanschluss kann das freie Ende des Befestigungselements einen Bolzen aufweisen, durch den das Befestigungselement mit der Richtstütze verbindbar ist.

Die erfindungsgemäße Aufgabe wird weiterhin gelöst durch ein Schalungssystem zur Herstellung eines Bauwerks aus Ortbeton mit einem zuvor beschriebenen Befestigungselement, wobei das Schalungssystem nur an einer Seite durch eine oder mehrere Richtstützen abgestützt ist. Das Schalungssystem weist weiterhin eine Stellschalwand und eine Schließschalwand auf. Das Befestigungselement ist an der Stellschalwand angeordnet. Weiterhin weist das Schalungssystem eine Richtstütze auf, die am ansonsten freien Ende des zweiten Schenkels des Befestigungselements angeordnet ist. Im montierten Zustand des Schalungssystems übergreift das Befestigungselement die Schalhaut der Stellschalwand und die Schalhaut der Schließschalwand.

Erfindungsgemäß kann das Schalungssystem vollständig von der Schließschalwand her bedient werden. Insbesondere ist es möglich, eine einseitige Ankerung von der Schließschalwand her einzusetzen. Durch das einseitige Ankern sind keine Arbeiten auf der Stellseite notwendig.

Das Befestigungselement ist nicht unmittelbar mit der Schließschalwand verbunden. Hierdurch kann beim Aufbau des Schalungssystems zunächst die Stellschalwand zusammen mit dem Befestigungselement aufgerichtet werden. Die Stellschalwand kann durch die Richtstütze abgestützt werden. Dieser nun sicher stehende Teil des Schalungssystems kann flexibel durch die Schließschalwand ergänzt werden.

Die Richtstütze kann teleskopierbar ausgebildet sein. Alternativ oder zusätzlich dazu kann die Richtstütze zwei durch eine Gewindeverbindung verbundene Teile aufweisen, um die Länge der Richtstütze stufenlos einstellen zu können.

Stellschalwand und Schließschalwand sind vorzugsweise gleich ausgebildet.

In besonders bevorzugter Ausgestaltung des Schalungssystems sind die Stellschalwand und/oder die Schließschalwand jeweils in Form eines Rahmentafelschalelements ausgebildet.

Die erfindungsgemäße Aufgabe wird schließlich gelöst durch ein Verfahren zum Aufbau eines Schalungssystems zur Herstellung eines Bauwerks aus Ortbeton, insbesondere zum Aufbau des zuvor beschriebenen Schalungssystems, das eine Stellschalwand und eine der Stellschalwand gegenüberliegend angeordnete Schließschalwand aufweist und nur an einer Seite durch eine oder mehrere Richtstützen abgestützt wird. Das Verfahren weist folgende Verfahrensschritte auf:
I) Befestigen eines Befestigungselements, insbesondere eines zuvor beschriebenen Befestigungselements, an einer Stellschalwand;
II) Aufstellen der Stellschalwand, insbesondere mit Hilfe eines Krans;
III) Sichern der Stellschalwand gegen Umfallen durch eine am Befestigungselement angebrachte Richtstütze, wobei die Richtstütze vor oder nach dem Aufrichten der Stellschalwand am Befestigungselement angeordnet werden kann;
IV) Aufstellen einer Schließschalwand unter das Befestigungselement, wobei das Befestigungselement nicht unmittelbar mit der Schließschalwand verbunden wird und im montierten Zustand des Schalungssystems eine Schalhaut der Stellschalwand und eine Schalhaut der Schließschalwand übergreift.

Vor dem Verfahrensschritt I), zwischen den Verfahrensschritten I)-IV) und/oder nach dem Verfahrensschritt IV) können weitere Verfahrensschritte durchgeführt werden.

Vorzugsweise wird nach dem Verfahrensschritt IV) der Verfahrensschritt
V) Verbinden der Schließschalwand mit der Stellschalwand durch zumindest einen Schalungsanker des Schalungssystems;
durchgeführt.

Bevorzugt wird die Schließschalwand nicht durch eine eigene Richtstütze abgestützt, sondern durch Schalungsanker über die Stellschalwand, das Befestigungselement und die Richtstütze am Befestigungselement gegen Umfallen gesichert.

Weitere Merkmale und Vorteile der Erfindung ergeben sich aus der nachfolgenden detaillierten Beschreibung eines Ausführungsbeispiels der Erfindung, aus den Patentansprüchen sowie anhand der Figuren der Zeichnung, die erfindungswesentliche Einzelheiten zeigt. Die verschiedenen Merkmale können je einzeln für sich oder zu mehreren in beliebigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können.

Es zeigen:
- Figur 1a: eine perspektivische Ansicht eines Teils eines Befestigungselements;
- Figur 1b: eine perspektivische Ansicht des Befestigungselements gemäß Figur 1a mit am Befestigungselement angeordneter Richtstütze;
- Figur 1c: eine perspektivische Ansicht des Befestigungselements gemäß Figur 1b, wobei die Richtstütze in Figur 1c fest am Befestigungselement gesichert ist;
- Figur 2a: eine schematische Seitenansicht eines Schalungssystems mit einer Stellschalwand sowie dem Befestigungselement und der daran angeordneten Richtstütze gemäß Figur 1c;
- Figur 2b: eine perspektivische Ansicht eines ersten Ausschnitts aus Figur 2a;
- Figur 2c: eine perspektivische Ansicht eines zweiten Ausschnitts aus Figur 2a;
- Figur 2d: eine schematische Seitenansicht des Schalungssystems gemäß Figur 2a in teilweise aufgerichtetem Zustand;
- Figur 2e: eine schematische Seitenansicht des Schalungssystems gemäß Figur 2d in vollständig aufgerichtetem Zustand;
- Figur 2f: eine schematische Seitenansicht des Schalungssystems gemäß Figur 2e, wobei das Schalungssystem eine Schließschalwand aufweist;
- Figur 2g: eine perspektivische Ansicht des Schalungssystems gemäß Figur 2f und
- Figur 2h: eine perspektivische Ansicht des Schalungssystems gemäß Figur 2g bei der Ergänzung des Schalungssystems mit einer weiteren Schließschalwand.

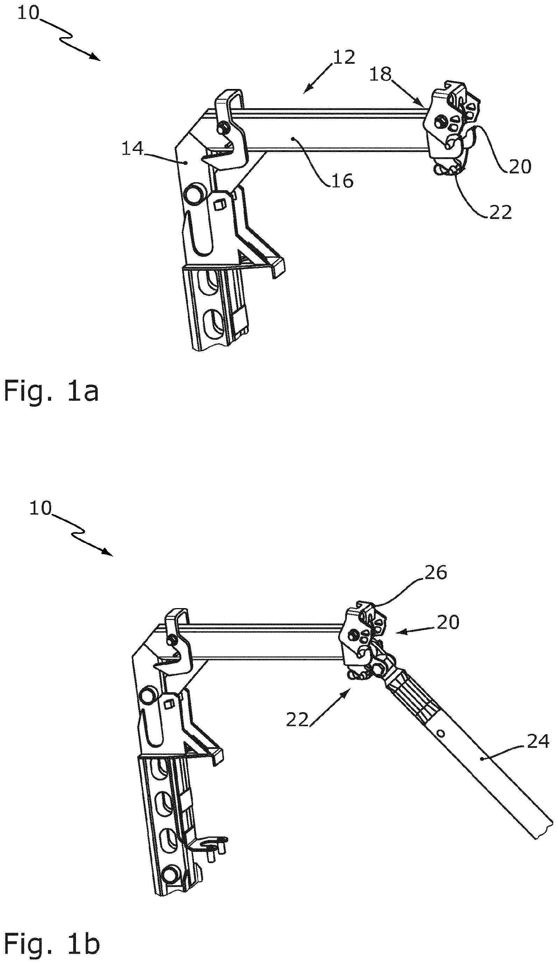

**Figur 1a** zeigt ein Befestigungselement **10** mit einem winkelförmigen Element **12.** Das winkelförmige Element 12 weist einen ersten Schenkel **14** und einen zweiten Schenkel **16** auf. Der zweite Schenkel 16 ist um ±30° insbesondere ±20° rechtwinklig zum ersten Schenkel 14 angeordnet. Der zweite Schenkel 16 ist starr mit dem ersten Schenkel 14 verbunden.

Der zweite Schenkel 16 weist ein freies Ende **18** auf. Das Befestigungselement 10 weist am freien Ende 18 einen ersten Richtstützenanschluss **20** und einen zweiten Richtstützenanschluss **22** auf.

**Figur 1b** zeigt das Befestigungselement 10 gemäß Figur 1a, wobei am ersten Richtstützenanschluss 20 eine Richtstütze **24** angeordnet ist. Der erste Richtstützenanschluss 20 weist dabei eine begrenzt verschwenkbare Kappe **26** auf, die in Figur 1b im aufgeklappten Zustand dargestellt ist. Die Richtstütze 24 kann alternativ zu der in Figur 1b gezeigten Anordnung an der zweiten Richtstützenaufnahme 22 durch einen Bolzen, der mit einem Splint gesichert ist, angeordnet werden. Auch an der zweiten Richtstützenaufnahme 22 ist die Richtstütze 24 begrenzt verschwenkbar, aber unverlierbar, am Befestigungselement 10 angeordnet.

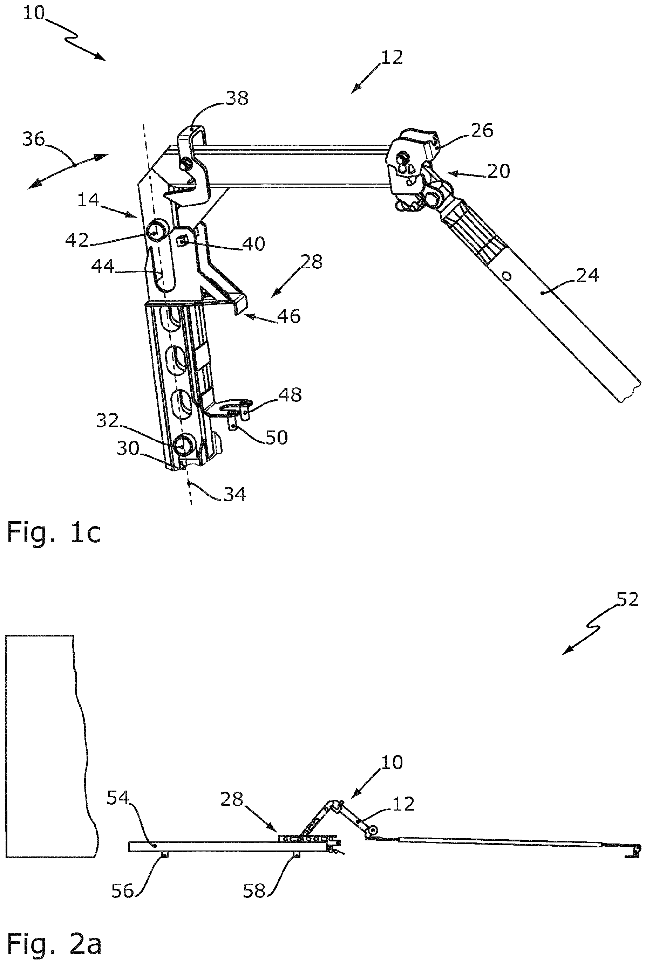

**Figur 1c** zeigt das Befestigungselement 10 gemäß Figur 1b, wobei die Kappe 26 im geschlossenen Zustand dargestellt ist. Die Richtstütze 24 ist dadurch begrenzt verschwenkbar, aber unverlierbar, am Befestigungselement 10 gehalten. Zur Entnahme der Richtstütze 24 muss die Kappe 26 in den geöffneten Zustand gemäß Figur 1b überführt werden. Die Kappe 26 kann hierzu mit einer Fernbetätigung (nicht gezeigt), insbesondere in Form eines Stabes, aufgeschwenkt werden. Mit anderen Worten ist durch die Fernbetätigung die Rastverbindung zwischen der Richtstütze 24 und dem Befestigungselement 10 lösbar.

Die Kappe 26 ist dabei derart ausgebildet, dass sie beim Einführen der Richtstütze 24 in den ersten Richtstützenanschluss 20 schließt. Die Richtstütze 24 kann dadurch am ersten Richtstützenanschluss 20 angeordnet werden, selbst wenn sich das Befestigungselement 10 bereits in großer Höhe befindet und die Richtstütze 24 von einem Bauarbeiter, der am Boden steht, in den Richtstützenanschluss 20 eingeführt wird. Die Kappe 26 kann durch ein Federelement (nicht gezeigt) und/oder die Schwerkraft im geschlossenen Zustand gemäß Figur 1c gehalten werden. Der erste Richtstützenanschluss 20 ist somit in Form eines Schnellanschlusses ausgebildet.

Das Befestigungselement 10 weist ein Montageteil **28** auf. Das Montageteil 28 weist ein Langloch **30** auf, in dem ein erster Bolzen **32** geführt ist, der am ersten Schenkel 14 angeordnet ist, sodass das winkelförmige Element 12 in Richtung der Längsachse **34** des Montageteils 28 begrenzt verschiebbar und um die Achse des ersten Bolzens 32 in Richtung eines Doppelpfeils **36** begrenzt verschwenkbar ist. Durch die Verschwenkbarkeit ist das Befestigungselement 10 leicht montierbar (siehe Figur 2a). Die Bewegbarkeit des winkelförmigen Elements 12 relativ zum Montageteil 28 kann jedoch durch eine Verrastung eines Schwenkbügels **38** an einem Rastvorsprung **40** des Montageteils 28 aufgehoben werden, wenn sich ein zweiter Bolzen **42** des winkelförmigen Elements 12 in einer Nut **44** des Montageteils 28 befindet.

Zur Montage des Montageteils 28 weist das Montageteil 28 einen Übergriffbügel **46** auf. Weiterhin kann das Montageteil 28 zumindest einen Vorsprung **48, 50** zur Montage des Montageteils 28 aufweisen. Der zumindest eine Vorsprung 48, 50 ist vorzugsweise - wie dargestellt - in Form eines Zapfens ausgebildet.

**Figur 2a** zeigt ein Schalungssystem **52** mit dem zuvor beschriebenen Befestigungselement 10. Das Befestigungselement 10 ist mit seinem Montageteil 28 an einer Stellschalwand **54** angeordnet. Die Stellschalwand 54 liegt über Holzlatten **56, 58** abgestützt im Wesentlichen eben auf dem Boden. Aufgrund der Verschwenkbarkeit (siehe Doppelpfeil 36 in Figur 1c) des winkelförmigen Elements 12 relativ zum Montageteil 28 ist das Befestigungselement 10 an der Stellschalwand 54 montierbar, ohne die Stellschalwand 54 anheben zu müssen.

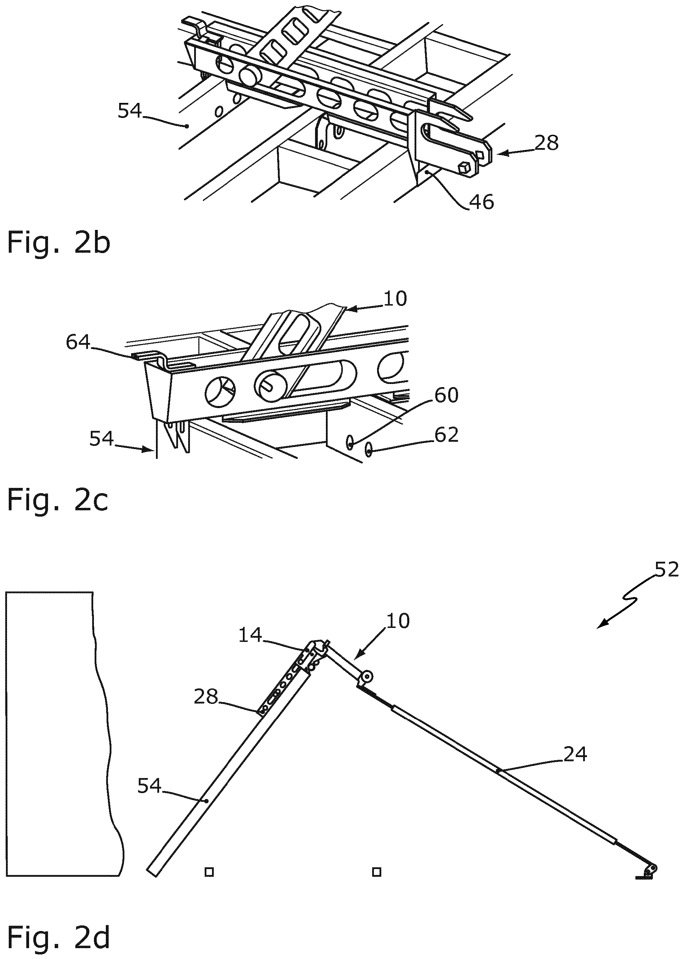

**Figur 2b** zeigt in einer ersten Ansicht die Befestigung des Montageteils 28 an der Stellschalwand 54. Der Übergriffbügel 46 übergreift dabei teilweise die Stellschalwand 54.

**Figur 2c** zeigt eine weitere Ansicht der Befestigung des Befestigungselements 10 an der Stellschalwand 54. Aus einer Zusammenschau von Figur 1c mit Figur 2c ist ersichtlich, dass die Vorsprünge 48, 50 (siehe Figur 1c) in passende Ausnehmungen **60, 62** der Stellschalwand 54 eingeführt sind. Ein begrenzt verschiebbares Riegelelement **64** sichert das Befestigungselement 10 an der Stellschalwand 54, indem das vorgeschobene Riegelelement 64 die Entnahme der Vorsprünge 48, 50 (siehe Figur 1c) aus den Ausnehmungen 60, 62 verhindert. Das Befestigungselement 10 wird dadurch reversibel lösbar durch Formschluss an der Stellschalwand 54 gehalten.

**Figur 2d** zeigt das Aufrichten des Schalungssystems 52. Der erste Schenkel 14 des Befestigungselements 10 befindet sich dabei parallel zur Längsachse 34 (siehe Figur 1c) des Montageteils 28. Allerdings ist der zweite Bolzen 42 (siehe Figur 1c) noch nicht in die Nut 44 (siehe Figur 1c) eingefahren. Das Aufrichten der Stellschalwand 54 kann durch einen Kran und/oder mittels der Richtstütze 24 erfolgen.

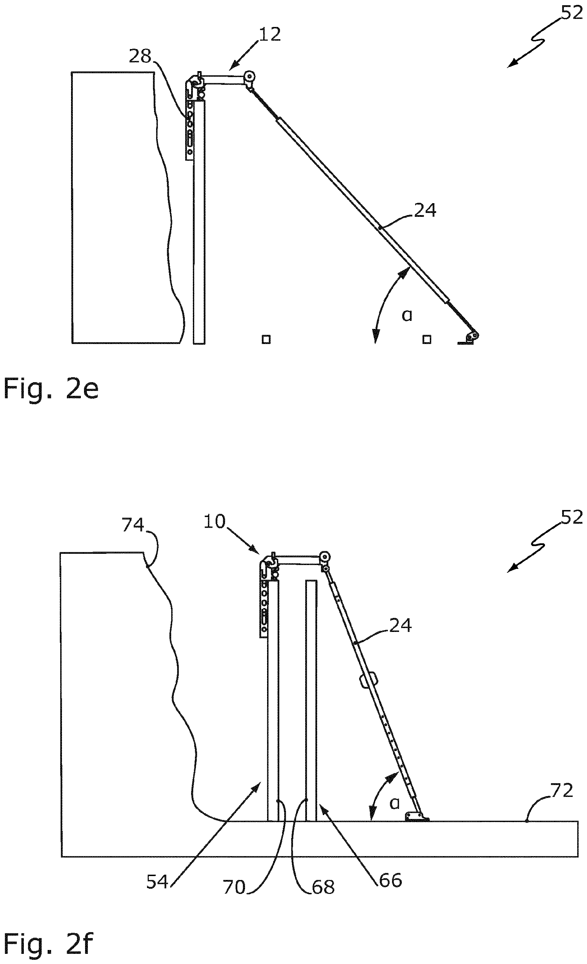

**Figur 2e** zeigt das Schalungssystem 52 im aufgerichteten Zustand. Die Richtstütze 24 weist dabei vorzugsweise einen Winkel α zwischen 20° und 70° zum Boden auf. Aufgrund der Schwerkraft ist das winkelförmige Element 12 weitestmöglich in das Montageteil 28 eingetaucht. Der zweite Bolzen 42 (siehe Figur 1c) befindet sich am Anschlag der Nut 44 (siehe Figur 1c) und das freie Ende des Schwenkbügels 38 (siehe Figur 1c) hintergreift den Rastvorsprung 40 (siehe Figur 1c). Das winkelförmige Element 12 befindet sich dadurch in einer Montagestellung, in der es lösbar verrastbar am Montageteil 28 angeordnet ist.

**Figur 2f** zeigt das vervollständigte Schalungssystem 52. Das Schalungssystem 52 weist dabei eine Schließschalwand **66** auf. Eine Schalhaut **68** der Schließschalwand 66 verläuft dabei bis auf ±20° parallel zu einer Schalhaut **70** der Stellschalwand 54. Die Schließschalwand 66 ist weder unmittelbar mit dem Befestigungselement 10 noch mit der Richtstütze 24 verbunden. Die Richtstütze 24 schließt im vollständig montierten Zustand des Schalungssystems 52 - wie in Figur 2f gezeigt - einen Winkel α zwischen 60° und 80° mit dem Boden **72** ein.

Sowohl die Stellschalwand 54 als auch die Schließschalwand 66 sind jeweils in Form eines Rahmentafelschalelements ausgebildet.

Das Befestigungselement 10 verbindet die Richtstütze 24 über die Schließschalwand 66 hinweg mit der Stellschalwand 54. Hierdurch kann die Stellschalwand 54 trotz eines Hindernisses **74** mit der Richtstütze 24 gegen Umfallen gesichert werden.

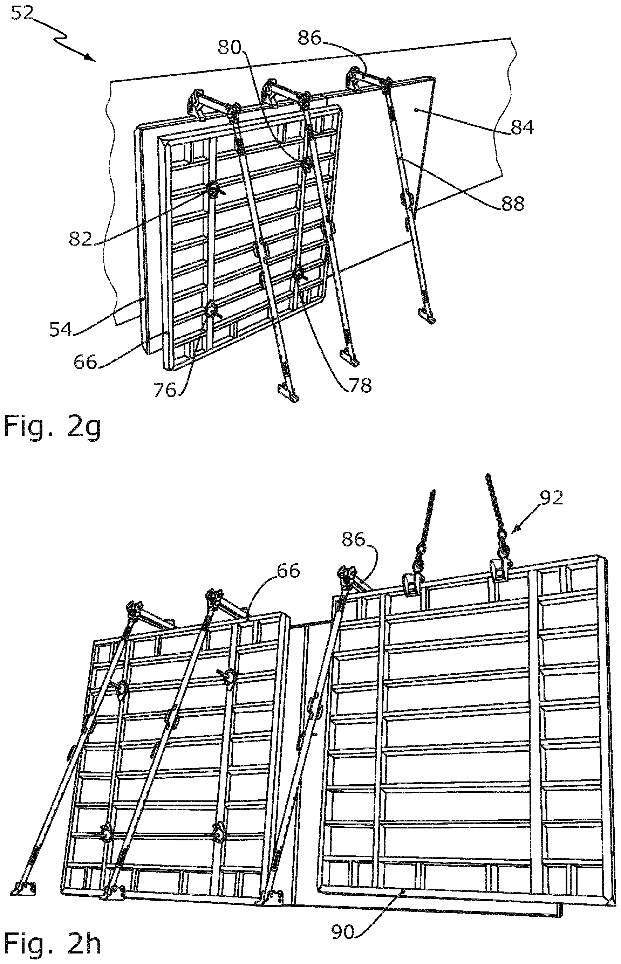

**Figur 2g** zeigt das Schalungssystem 52 gemäß Figur 2f in einer perspektivischen Ansicht. Gemäß Figur 2g wurde die Schließschalwand 66 in einem weiteren Schritt durch Schalungsanker **76, 78, 80, 82** gegen Umfallen gesichert, wobei die Schalungsanker 76, 78, 80, 82 mit der Stellschalwand 54 verbunden sind. An die Stellschalwand 54 wurde eine weitere Stellschalwand **84** angesetzt, die durch Schalschlösser (nicht gezeigt) mit der Stellschalwand 54 verbunden ist. Die weitere Stellschalwand 84 ist identisch zur Stellschalwand 54 ausgebildet. Die weitere Stellschalwand 84 wird durch ein weiteres Befestigungselement **86,** das mit einer weiteren Richtstütze **88** verbunden ist, gegen Umfallen gesichert.

**Figur 2h** zeigt das Anordnen einer weiteren Schließschalwand **90** an der Schließschalwand 66. Die weitere Schließschalwand 90 wird - durch ein Krangehänge **92,** das in Figur 2h angedeutet ist - unter dem weiteren Befestigungselement 86 eingeschwenkt und an der Schließschalwand 66 angeordnet. Das Krangehänge 92 kann hierzu gegebenenfalls beim Einfahren der weiteren Schließschalwand 90 umgehängt werden.

Unter Vornahme einer Zusammenschau aller Figuren der Zeichnung betrifft die Erfindung zusammenfassend ein Befestigungselement 10, 86, das oberseitig an einer Stellschalwand 54, 84 eines Schalungssystems 52 montierbar ist. Das Befestigungselement 10, 86 weist ein winkelförmiges Element 12 mit einem ersten Schenkel 14 und einem zweiten Schenkel 16 auf. Der erste Schenkel 14 kann in Form eines Montageteils 28 ausgebildet sein, das reversibel lösbar an der Stellschalwand 54, 84 befestigbar ist. Alternativ dazu kann der erste Schenkel 14 mittelbar oder unmittelbar am Montageteil 28 angeordnet sein. Das freie Ende 18 des zweiten Schenkels 16 weist eine Anschlussmöglichkeit für eine Richtstütze 24, 88 auf oder ist mit einer Richtstütze 24, 88 verbunden. Das winkelförmige Element 12 ist verschwenkbar zum Montageteil 28 ausgebildet. Bei aufgestellter Stellschalwand 54, 84 kann die Stellschalwand 54, 84 zusammen mit dem Befestigungselement 10, 86 und der Richtstütze 24, 88 einen Bogen bilden, in den eine Schließschalwand 66, 90 einführbar ist.

## Patentansprüche

1. Befestigungselement (10, 86) als Anbindungspunkt einer Richtstütze (24, 88) an einer Stellschalwand (54, 84) eines Schalungssystems (52) aus Stellschalwand, Schließschalwand und der Richtstütze zur Herstellung eines Bauwerks aus Ortbeton, wobei das Befestigungselement (10, 86) Folgendes aufweist:
a) ein Montageteil (28), das reversibel lösbar oberseitig an der Stellschalwand (54, 84) des Schalungssystems (52) montierbar ist und ein Langloch (30) aufweist, in dem ein erster Bolzen (32) führbar ist;
b) ein winkelförmiges Element (12) mit
i. einem ersten Schenkel (14), der am Montageteil (28) angeordnet oder ausgebildet ist und an dem der erste Bolzen (32) angeordnet ist, sodass das winkelförmige Element (12) in Richtung der Längsachse (34) des Montageteils (28) begrenzt verschiebbar und um eine Achse (36) des ersten Bolzens (32) begrenzt verschwenkbar ist;
ii. einem gewinkelt zum ersten Schenkel (14) angeordneten oder ausgebildeten zweiten Schenkel (16); wobei die Richtstütze (24, 88) des Schalungssystems (52) an das bis auf die Richtstütze (24, 88) frei auskragende Ende (18) des zweiten Schenkels (16) anordenbar oder angeordnet ist, sodass die Richtstütze die Stellschalwand abstützen kann, und zwar unter Bildung eines Bogens aus Stellschalwand, Befestigungselement und Richtstütze über die Schließschalwand hinweg ohne unmittelbar die Schließschalwand mit dem Befestigungselement zu verbinden.

2. Befestigungselement nach Anspruch 1, bei dem der erste Schenkel (14) relativ zum zweiten Schenkel (16) starr ausgebildet ist.

3. Befestigungselement nach Anspruch 1 oder 2, bei dem das frei auskragende Ende (18) des zweiten Schenkels (16) relativ zum Montageteil (28) bewegbar ist.

4. Befestigungselement nach Anspruch 3, bei dem das winkelförmige Element (12) bezüglich seiner Verschwenkbarkeit relativ zum Montageteil (28) lösbar verrastbar am Montageteil (28) angeordnet ist.

5. Befestigungselement nach einem der vorhergehenden Ansprüche, bei dem die Richtstütze (24, 88) lösbar verrastbar am Ende (18) des zweiten Schenkels (16) montierbar ist.

6. Befestigungselement nach Anspruch 5, bei dem die Verrastung der Richtstütze (24, 88) am Ende des zweiten Schenkels (16) fernbetätigt lösbar ist.

7. Befestigungselement nach einem der vorhergehenden Ansprüche, bei dem das Montageteil (28) durch eine Formschlussverbindung an die Stellschalwand (54, 84) montierbar ist.

8. Schalungssystem (52) zur Herstellung eines Bauwerks aus Ortbeton, wobei das Schalungssystem (52) Folgendes aufweist:
A) eine Stellschalwand (54, 84);
B) eine der Stellschalwand (54, 84) gegenüberliegend angeordnete Schließschalwand (66, 90);
C) ein reversibel lösbar an der Stellschalwand (54, 84) angeordnetes Befestigungselement (10, 86) nach einem der Ansprüche 1 bis 7;
D) eine am freien Ende (18) des zweiten Schenkels (16) des Befestigungselements (10, 86) angeordnete Richtstütze (24, 88).

9. Schalungssystem nach Anspruch 8, bei dem die Stellschalwand (54, 84) und/oder die Schließschalwand (66, 90) in Form eines Rahmentafelschalelements ausgebildet sind.

10. Verfahren zum Aufbau eines Schalungssystems (52) zur Herstellung eines Bauwerks aus Ortbeton, wobei das Schalungssystem (52) eine Stellschalwand (54, 84) und eine der Stellschalwand (54, 84) gegenüberliegend angeordnete Schließschalwand (66, 90) aufweist, wobei das Verfahren folgende Verfahrensschritte aufweist:
I) Montieren eines Befestigungselements (10, 86) am Randbereich einer Stellschalwand (54, 84);
II) Aufrichten der Stellschalwand (54, 84);
III)Abstützen der Stellschalwand (54, 84) durch eine am Befestigungselement (10, 86) angeordnete Richtstütze (24, 88);
IV) Einführen einer Schließschalwand (66, 90) unter das Befestigungselement (10, 86), wobei das Befestigungselement (10, 86) nicht unmittelbar mit der Schließschalwand (66, 90) verbunden wird und im montierten Zustand des Schalungssystems (52) eine Schalhaut der Stellschalwand (54, 84) und eine Schalhaut der Schließschalwand (66, 90) übergreift.

## Claims

1. Fastening element (10, 86) as an attachment point of a push-pull prop (24, 88) on a positionable formwork wall (54, 84) of a formwork system (52) of positionable formwork wall, closing formwork wall and the push-pull prop for producing a building structure from cast-in-place concrete, wherein the fastening element (10, 86) comprises the following:
a) a mounting part (28) that may be mounted in a reversible and detachable manner on the upper side of the positionable formwork wall (54, 84) of the formwork system (52) and that comprises an elongated hole (30) in which a first bolt (32) may be inserted;
b) an angular element (12) having
i. a first limb (14) that is arranged on or embodied on the mounting part (28) and on which the first bolt (32) is arranged with the result that the angular element (12) may displace in a limited manner in the direction of the longitudinal axis (34) of the mounting part (28) and may pivot in a limited manner about an axis (36) of the first bolt (32);
ii. a second limb (16) that is arranged or embodied at an angle with respect to the first limb (14);
wherein the push-pull prop (24, 88) of the formwork system (52) may be arranged or is arranged on the end (18) of the second limb (16), which projects freely to the push-pull prop (24, 88) with the result that the push-pull prop may brace the positionable formwork wall and namely while forming an arch of positionable formwork wall, fastening element and push-pull prop over the closing formwork wall without directly connecting the closing formwork wall to the fastening element.

2. Fastening element according to Claim 1 in which the first limb (14) is embodied rigidly relative to the second limb (16).

3. Fastening element according to Claim 1 or 2 in which the freely projecting end (18) of the second limb (16) may move relative to the mounting part (28).

4. Fastening element according to Claim 3 in which the angular element (12) is arranged so that it may latch on the mounting part (28) in a detachable manner in relation to the ability of said angular element to pivot relative to the mounting part (28).

5. Fastening element according to any one of the preceding claims, in which the push-pull prop (24, 88) may be mounted in a detachable and latchable manner on the end (18) of the second limb (16).

6. Fastening element according to Claim 5 in which the latching arrangement of the push-pull prop (24, 88) on the end of the second limb (16) may be detached remotely.

7. Fastening element according to any one of the preceding claims, in which the mounting part (28) may be mounted by means of a positive-locking connection to the positionable formwork wall (54, 84).

8. Formwork system (52) for producing a building structure from cast-in-place concrete, wherein the formwork system (52) comprises the following:
A) a positionable formwork wall (54, 84);
B) a closing formwork wall (66, 90) that is arranged opposite the positionable formwork wall (54, 84);
C) a fastening element (10, 86) that is arranged in a reversible and detachable manner on the positionable formwork wall (54, 84) according to any one of claims 1 to 7;
D) a push-pull prop (24, 88) that is arranged on the free end (18) of the second limb (16) of the fastening element (10, 86).

9. Formwork system according to Claim 8 in which the positionable formwork wall (54, 84) and/or the closing formwork wall (66, 90) are embodied in the form of a frame panel formwork element.

10. Method for constructing a formwork system (52) for producing a building construction from cast-in-place concrete, wherein the formwork system (52) comprises a positionable formwork wall (54, 84) and a closing formwork wall (66, 90) that is arranged opposite the positionable formwork wall (54, 84), wherein the method comprises the following method steps:
I) mounting a fastening element (10, 86) on the edge region of a positionable formwork wall (54, 84);
II) erecting the positionable formwork wall (54, 84);
III) bracing the positionable formwork wall (54, 84) by means of a push-pull prop (24, 88) that is arranged on the fastening element (10, 86);
IV) inserting a closing formwork wall (66, 90) under the fastening element (10, 86), wherein the fastening element (10, 86) is not directly connected to the closing formwork wall (66, 90) and in the mounted state of the formwork system (52) engages over a formwork shell of the positionable formwork wall (54, 84) and a formwork shell of the closing formwork wall (66, 90).

## Revendications

1. Élément de fixation (10, 86) servant de point de liaison d'un étai (24, 88) à un panneau formant face de référence (54, 84) d'un système de coffrage (52) constitué d'un panneau formant face de référence, d'un panneau formant face de fermeture et de l'étai pour la fabrication d'un bâtiment en béton coulé sur place, l'élément de fixation (10, 86) comportant les éléments suivants :
a) une partie de montage (28), qui peut être montée détachable de manière réversible sur le côté supérieur du panneau formant face de référence (54, 84) du système de coffrage (52) et comporte un trou oblong (30), dans lequel un premier boulon (32) peut être guidé ;
b) un élément angulaire (12) comprenant
i. une première branche (14), qui est disposée ou réalisée sur la partie de montage (28) et sur laquelle est disposé le premier boulon (32), de telle sorte que l'élément angulaire (12) peut être déplacé de manière limitée dans la direction de l'axe longitudinal (34) de la partie de montage (28) et peut être pivoté de manière limitée sur un axe (36) du premier boulon (32) ;
ii. une seconde branche (16) disposée ou réalisée en formant un angle par rapport à la première branche (14) ;
dans lequel l'étai (24, 88) du système de coffrage (52) est ou peut être disposé sur l'extrémité (18) de la seconde branche (16) faisant saillie librement sauf au niveau de l'étai (24, 88), de telle sorte que l'étai peut soutenir le panneau formant face de référence, et ce en formant un arc constitué du panneau formant face de référence, de l'élément de fixation et de l'étai par-dessus le panneau formant face de fermeture sans relier directement le panneau formant face de fermeture à l'élément de fixation.

2. Élément de fixation selon la revendication 1, dans lequel la première branche (14) est réalisée fixe par rapport à la seconde branche (16).

3. Élément de fixation selon la revendication 1 ou 2, dans lequel l'extrémité (18) de la seconde branche (16) faisant saillie librement est mobile par rapport à la partie de montage (28).

4. Élément de fixation selon la revendication 3, dans lequel l'élément angulaire (12) est disposé, en ce qui concerne sa liberté de pivotement par rapport à la partie de montage (28), de façon à pouvoir être enclenché de manière détachable sur la partie de montage (28).

5. Élément de fixation selon l'une des revendications précédentes, dans lequel l'étai (24, 88) peut être monté de façon à pouvoir être enclenché de manière détachable sur l'extrémité (18) de la seconde branche (16).

6. Élément de fixation selon la revendication 5, dans lequel l'enclenchement de l'étai (24, 88) sur l'extrémité de la seconde branche (16) peut être détaché par commande à distance.

7. Élément de fixation selon l'une des revendications précédentes, dans lequel la partie de montage (28) peut être montée sur le panneau formant face de référence (54, 84) par une liaison par complémentarité de forme.

8. Système de coffrage (52) destiné à la fabrication d'un bâtiment en béton coulé sur place, le système de coffrage (52) comportant les éléments suivants :
A) un panneau formant face de référence (54, 84) ;
B) un panneau formant face de fermeture (66, 90) disposé opposé au panneau formant face de référence (54, 84) ;
C) un élément de fixation (10, 86) selon l'une des revendications 1 à 7, disposé détachable de manière réversible sur le panneau formant face de référence (54, 84) ;
D) un étai (24, 88) disposé sur l'extrémité libre (18) de la seconde branche (16) de l'élément de fixation (10, 86).

9. Système de coffrage selon la revendication 8, dans lequel le panneau formant face de référence (54, 84) et/ou le panneau formant face de fermeture (66, 90) sont réalisés sous la forme d'un élément de coffrage cadre.

10. Procédé de construction d'un système de coffrage (52) destiné à la fabrication d'un bâtiment en béton coulé sur place, le système de coffrage (52) comportant un panneau formant face de référence (54, 84) et un panneau formant face de fermeture (66, 90) disposé opposé au panneau formant face de référence (54, 84), le procédé comportant les étapes de procédé suivantes :
I) montage d'un élément de fixation (10, 86) sur la zone de bord d'un panneau formant face de référence (54, 84) ;
II) relevage du panneau formant face de référence (54, 84) ;
III) étayage du panneau formant face de référence (54, 84) par un étai (24, 88) disposé sur l'élément de fixation (10, 86) ;
IV) introduction d'un panneau formant face de fermeture (66, 90) sous l'élément de fixation (10, 86), l'élément de fixation (10, 86) n'étant pas relié directement au panneau formant face de fermeture (66, 90) et chevauchant, lorsque le système de coffrage (52) est monté, un contreplaqué du panneau formant face de référence (54, 84) et un contreplaqué du panneau formant face de fermeture (66, 90).
